# EUROPEAN PATENT SPECIFICATION

(11) **EP 2 941 371 B1**
(45) Date of publication and mention of the grant of the patent: **11.03.2020**
(21) Application number: 14735146.4
(22) Date of filing: 06.01.2014
(51) Int. Cl.: B60S 1/34

(54) **CONNECTING HOOK AND WIPER**
VERBINDUNGSHAKEN UND WISCHER
CROCHET DE LIAISON ET ESSUIE-GLACE

(30) Priority: 06.01.2013 CN 201320004124 U
(43) Date of publication of application: 11.11.2015
(73) Proprietor: Bosch Automotive Products (Changsha) Co., Ltd, Changsha, Hunan 410100 (CN)
(72) Inventor: JOACHIM, Zimmer, Changsha Hunan 410100 (CN); KUMAR, Suresh, Changsha Hunan 410100 (CN)
(74) Representative: Isarpatent
(86) International application number: PCT/CN2014/070136
(87) International publication number: WO 2014/106481

(56) References cited:
- EP-A1- 0 713 809
- EP-A1- 0 713 809
- CN-A- 1 394 179
- CN-U- 203 237 216
- DE-A1- 3 521 527
- DE-A1- 3 810 017
- DE-A1- 3 810 017
- DE-A1- 10 052 570
- JP-A- 2004 161 023
- JP-A- 2004 161 023
- US-A- 4 741 068
- US-B1- 6 253 409

## Description

### FIELD OF THE INVENTION

The present invention relates to the field of automobile accessories, and in particular to a wiper for vehicle and a connecting hook used in the wiper.

### BACKGROUND

Currently, the windshield of automobile is generally equipped with a wiper which, in rainy days, can scrape off rain and dust accumulated on vehicle windows, thus providing a clear view field for users of automobile. This enables the driver to clearly see the outside view through vehicle windows and thus improves safety of driving.

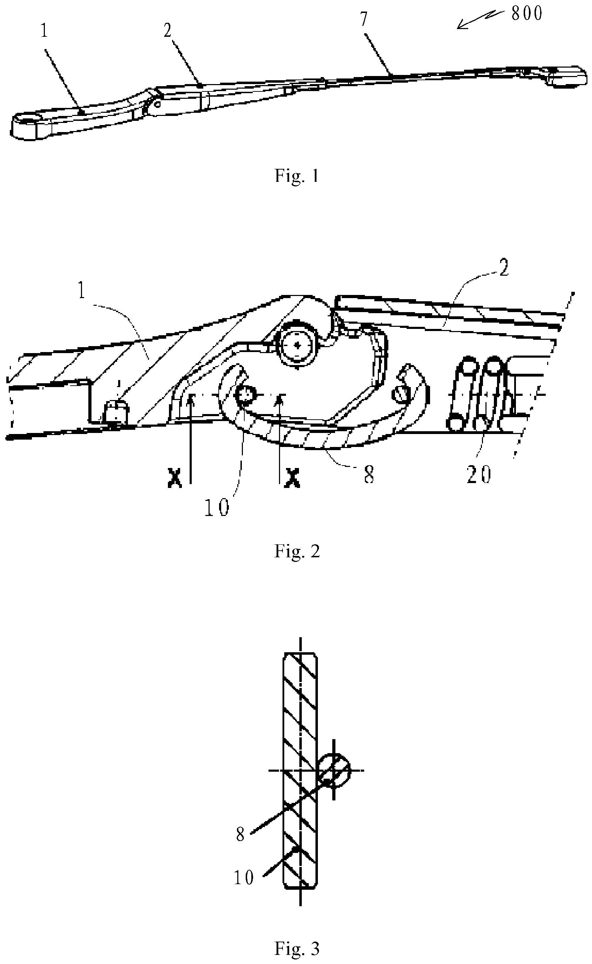

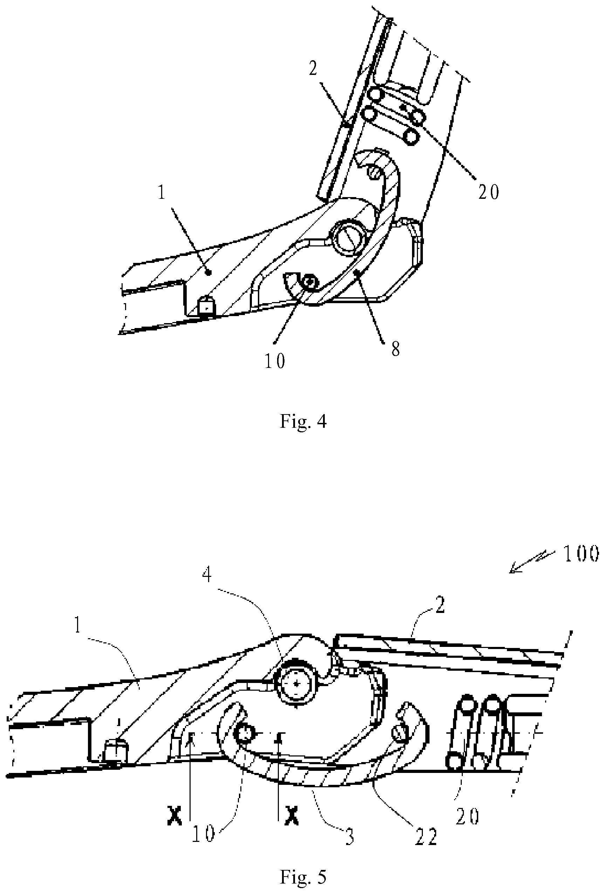

Figs. 1 to 4 show a schematic structure view of a wiper in the prior art. As shown in Figs. 1 to 4, the existing wiper 800 typically comprises an arm head 1 mounted with a column pin 10, a retaining arm 2 connected to the arm head 1 while being rotatable relative to the arm head 1, an arm rod 7 connected to the retaining arm 2 and a C-shaped connecting hook 8, and a tension spring 20 is mounted inside the retaining arm 2. One end of the C-shaped connecting hook 8 is hooked at the column pin 10, and the other end of the C-shaped connecting hook 8 is hooked at the tension spring 20. As shown in Fig. 4, when the retaining arm 2 with the arm rod 7 connected thereto rotates relative to the arm head 1, the C-shaped connecting hook 8 rotates about the column pin 10 under the action of pull force of the tension spring 20 so that the connecting hook 8 slides on the column pin 10 to create friction. With further reference to Fig. 3, the C-shaped connecting hook 8 has a circular cross-section. Therefore, a point contact is formed between the C-shaped connecting hook 8 and the column pin 10. However, such a point contact results in large contact stress between the C-shaped connecting hook 8 and the column pin 10, which easily leads to wear of the C-shaped connecting hook 8 and the column pin 10, thus reducing life span of the wiper 800.

The following patent publications D1 and D2 disclose technological background art for the present invention:
- D1: US 6 253 409 B1 (TERAI TADAYOSHI [JP]) 3 July 2001 (2001-07-03)
- D2: JP 2004 161023 A (ASMO CO LTD) 10 June 2004 (2004-06-10)

Document D1 shows a connecting hook which has a first hooking portion and a second hooking portion which are formed integrally, the first hooking portion has a first contacting surface and a second hooking portion has a second contacting surface. The first contacting surface is in a particular configuration in a cross-section of the connecting hook.

Document D2 discloses a connecting hook which has a circular (round) cross section. The connecting hook is connected to a coil tensile spring and a rod at its two ends. However, due to their configuration, the hooks of D1 and D2 still have a short life span.

Therefore, there is a need to provide an improved solution to overcome existing technical problems in the prior art.

### SUMMARY OF THE INVENTION

Therefore, the object of the present invention is to provide a connecting hook as well as a wiper using such a hook with an extended life span. This object is solved by a connecting hook according to claim 1 and a wiper using such a hook according to claim 6. Further advantageus embodiments, advantages and improvements are listed in the dependent claims. Hereinafter some aspects of the invention are highlighted.

The invention provides a connecting hook having a first hooking portion and a second hooking portion which are formed integrally, the first hooking portion has a first contacting surface, the second hooking portion has a second contacting surface, and the first contacting surface is in a straight line in a cross section of the connecting hook.

According to the invention, in the above-described connecting hook, the second contacting surface is in a circular arc in a cross section of the connecting hook.

In the above-described connecting hook, the connecting hook transitions to the second contacting surface smoothly from the first contacting surface.

According to a second aspect, in the above-described connecting hook, the connecting hook is punched from a metal sheet, and two sides of the metal sheet at the second contacting surface bend towards a back surface direction of the second contacting surface.

According to a third aspect, in the above-described connecting hook, the metal sheet at two sides of the first contacting surface bends towards a back surface direction of the first contacting surface.

According to a fourth aspect, in the above-described connecting hook, the connecting hook has a circular cross section at the second hook portion, and the cross section of the first hooking portion of the connecting hook has a pair of straight lines that are parallel with each other.

According to a fifth aspect, in the above-described connecting hook, the connecting hook is of a C-shaped, and the first hooking portion and the second hooking portion are located at two ends of the C-shaped connecting hook respectively.

The invention provides a wiper comprising: an arm head mounted with a column pin, a retaining arm connected to the arm head while being rotatable relative to the arm head, and the connecting hook as described above, wherein the first hooking portion is mounted to the pin, the second hooking portion is mounted to a resilient element which is pre-loaded, there is line contact between the first contacting surface and the pin, and the second contacting surface contacts the resilient element.

According to a further aspect, in the above-described wiper, the retaining arm is connected to the arm head via a pivot shaft, the retaining arm is rotatable relative to the arm head between a first position and a second position, and when the retaining arm rotates, the connecting hook rotates about the pin and creates a sliding movement between the first contacting surface and the pin; when the retaining arm is in the first position, an elastic force of the resilient element which is pre-loaded forms a forward direction torque to the retaining arm relative to the pivot shaft, and when the retaining arm is in the second position, an elastic force of the resilient element which is pre-loaded forms a reverse direction torque to the retaining arm relative to the pivot shaft.

According to a further aspect, in the above-described wiper, the pin is of a column shape, the resilient element has an arc-shaped curved hook which hooks the second contacting surface, and the resilient element, after being pre-loaded, has an elastic pulling force imposed on the second contacting surface of the connecting hook.

In the wiper according to the present invention, there is a line contact between the first hooking portion of the connecting hook which contacts with the pin mounted in the arm head and the pin, and as compared with a point contact in the wipers in the prior art, the connecting hook is in well-defined surface contact with the pin, thus reducing a contact stress between the connecting hook and the pin, and thereby greatly decreasing wear of the connecting hook and the pin and lengthening life span of the wiper.

Other aspects and features of the present invention will become apparent from the following detailed description made with reference to the accompanying drawings. However, it should be understood that the accompanying drawings are designed for the purpose of illustration only, and is not intended to limit the scope of the present invention since the scope of protection should be defined with reference to the appended claims. It should also be understood that the accompanying drawings merely intend to illustrate the structures and flowcharts described herein in a schematic way and are not necessarily drawn to scale unless otherwise specified.

### BRIEF DESCRIPTION OF THE DRAWINGS

The present invention will be more fully understood in connection with detailed description of specific embodiments made with reference to the accompanying drawings, in which identical elements are denoted by identical reference signs throughout the drawings, wherein:
Fig. 1 schematically shows an overall structure view of a wiper in the prior art;
Fig. 2 schematically shows a partial sectional view of the wiper in Fig. 1;
Fig. 3 is a schematic sectional view taken along an X-X line in Fig. 2, wherein other lines except for section lines are omitted in order to clearly show the pin and the connecting hook;
Fig. 4 schematically shows a sectional view of the wiper shown in Fig. 2 in another state;
Fig. 5 schematically shows a partial sectional view of the structure of a wiper according to a first specific embodiment of the present invention.
Fig. 6 is a schematic sectional view taken along an X-X line in Fig. 5, wherein other lines except for section lines are omitted in order to clearly show the pin and the connecting hook;
Fig. 7 shows a perspective view of a connecting hook of the wiper in Fig. 5;
Fig. 8 shows a schematic cross section view of a first hooking portion of the connecting hook in Fig. 7;
Fig. 9 shows a schematic cross section view of a second hooking portion of the connecting hook in Fig. 7;
Fig. 10 schematically shows a partial sectional view of the structure of a wiper according to a second specific embodiment of the present invention.
Fig. 11 is a schematic sectional view taken along an X-X line in Fig. 10, wherein other lines except for section lines are omitted in order to clearly show the pin and the connecting hook;
Fig. 12 shows a perspective view of a connecting hook of the wiper in Fig. 10;
Fig. 13 shows a schematic cross section view of a first hooking portion of the connecting hook in Fig. 12; and
Fig. 14 shows a schematic cross section view of a second hooking portion of the connecting hook in Fig. 12.

### DETAILED DESCRIPTION OF THE INVENTION

Specific embodiments of the present invention will be described in detail with reference to the accompanying drawings hereinafter in order that those of ordinary skills in the art can precisely understand the claimed subject matter of the present invention.

Figs. 5 to 9 are schematic views showing the structure of a wiper according to a first specific embodiment of the present invention. As shown in Figs. 5 to 9, the wiper 100 according to the first specific embodiment of the present invention comprises an arm head 1, a retaining arm 2 connected to the arm head 1 while being rotatable relative to the arm head 1 , and a connecting hook 3 according to the first specific embodiment of the present invention, wherein the arm head 1 is mounted with a column pin 10, a resilient element 20 which is pre-loaded is mounted in the retaining arm 2. The connecting hook 3 has a first hooking portion 31 and a second hooking portion 32 that are formed integrally. The first hooking portion 31 is mounted to the pin 10, and the second hooking portion 32 is mounted to the pre-loaded resilient element 20 so that the connecting hook 3 is mounted between the arm head 1 and the retaining arm 2. The first hooking portion 31 has a first contacting surface 310 which is in line contact with the pin 10.

As compared with a point contact in a wiper in the prior art, since the first hooking portion 31 of the connecting hook 3 is in line contact with the pin 10, a contact stress between the connecting hook 3 and the pin 10 is reduced, thus greatly decreasing wear of the connecting hook 3 and the pin 10 and lengthening life span of the wiper 100.

The retaining arm 2 is connected with the arm head 1 via a pivot shaft 4, and the retaining arm 2 is rotatable relative to the arm head 1 between a first position and a second position. As shown in Fig. 5, when the retaining arm 2 is in the first position, the retaining arm 2 is in a retracted state, and the pivot shaft 4 is located at a first side of a line connecting a contact point between the connecting hook 3 and the pin 10 and a contact point between the connecting hook 3 and the resilient element 20; when the retaining arm 2 is in the first position, an elastic force of the resilient element 20 which is pre-loaded forms a forward direction torque to the retaining arm 2 relative to the pivot shaft 4; during operation of the wiper 100, the retaining arm 2 turns away from the arm head 1 and rotates relative to the arm head 1 from the first position; and when the retaining arm 2 is in the second position (not shown), the pivot shaft 4 is located at a second side of a line connecting a contact point between the connecting hook 3 and the pin 10 and a contact point between the connecting hook 3 and the resilient element 20; when the retaining arm 2 is in the second position, an elastic force of the resilient element 20 which is pre-loaded forms a reverse direction torque to the retaining arm 2 relative to the pivot shaft 4 so that the elastic force of the resilient element 20 will always press a wiper blade which is hinged to a free end of an arm rod of the retaining arm 2, against the windshield of automobile. As can be seen, when the retaining arm 2 rotates relative to the arm head 1 between the first position and the second position, the connecting hook 3 rotates about the pin 10, thus creating sliding friction between the connecting hook 3 and the pin 10.

In this specific embodiment, the connecting hook 3 is of a "C" shape, the pin 10 is of a column shape, and the first hooking portion 31 and the second hooking portion 32 of the connecting hook 3 are located at two ends of the C-shaped connecting hook 3 respectively.

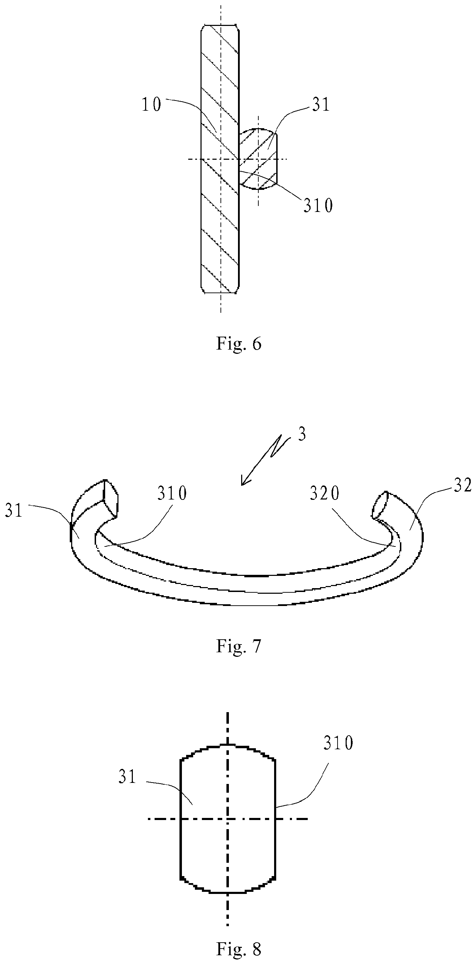

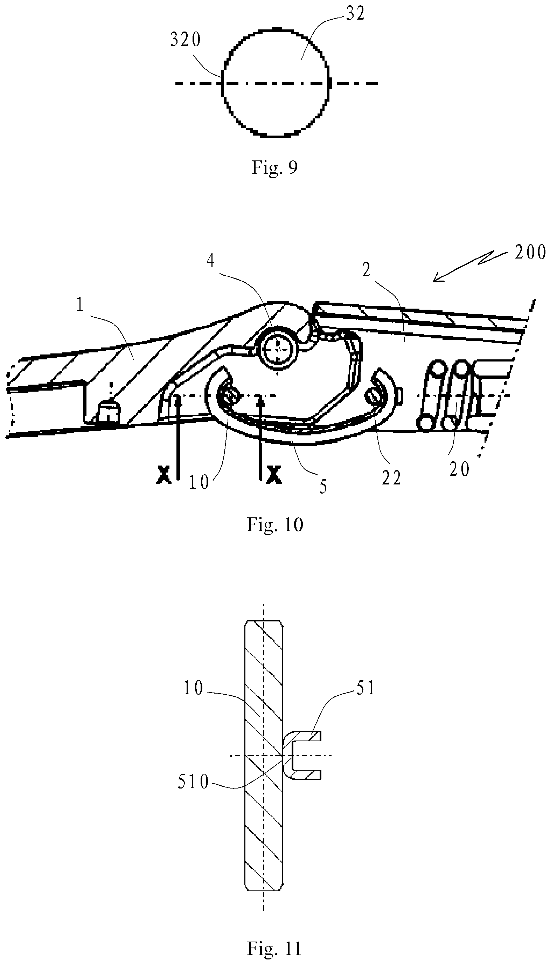

As shown in Figs. 6 to 8, the first contacting surface 31 of the connecting hook 3 is in a straight line in a cross section of the connecting hook 3. Therefore, the first contacting surface 31 of the connecting hook 3 can easily form a line contact with the column pin 10. As shown in Figs. 7 and 9, the second hooking portion 32 has a second contacting surface 320, which contacts the resilient element 20 and is in a circular arc in a cross section of the connecting hook 3. The resilient element 20 has an arc-shaped curved hook 22 (although the arc shape is not shown in the drawings due to perspective of view, those of ordinary skills in the art will understand that the specific structure of the curved hook 22 is known) which hooks the second contacting surface 320. Since the contacting surface 320 is in a circular arc in a cross section of the connecting hook 3, it can form a well-defined contact with the arc-shaped curved hook 22. The resilient element 20, after being pre-loaded, has an elastic pulling force imposed on the second contacting surface 320 of the connecting hook 3.

It is noted that such technical terms as "cross section" and "longitudinal section" are known to those of ordinary skills in the art. A "longitudinal section" generally refers to a surface shown after an object is cut along its axial direction. For example, the "longitudinal section" of a column is a rectangle, which is also referred to as "longitudinal profile" or "longitudinal tangent plane". A "cross section" generally refers to a surface shown after an object is cut in a direction perpendicular to the axial direction of the object. For example, the "cross section" of a column is a circle, which is also referred to as "cross profile" or "cross sectional plane". Therefore, the "cross section" of the connecting hook referred to in this application is used in its common definition, which means a section of the connecting hook cut in a direction perpendicular to the axial direction.

In an alternative embodiment shown in Figs. 7 to 9, the connecting hook 3 is of a solid structure. Specifically, the first hooking portion 31 of the connecting hook 3 has an approximately oval cross section as shown in Fig. 8. The approximately oval cross section of the first hooking portion 31 comprises a pair of straight lines that are parallel with each other, and alternatively, comprises a pair of arc lines that connect adjacent ends of the pair of straight lines. The second hooking portion 32 of the connecting hook 3 has a circular cross section as shown in Fig. 9. Optionally, the connecting hook 3 gradually transitions to the second contacting surface 320 from the first contacting surface 310 smoothly. That is, the cross section of the connecting hook 3 gradually transitions to an approximately oval cross section at the first hooking portion 31 from a circle at the second hooking portion 32 smoothly. Those of ordinary skills in the art will understand that such a structure can be easily achieved using methods in the prior art. For example, forging or punching can be used to form the structure.

The connecting hook 3 of the present invention is simple in structure and easy to achieve. It has a higher structural strength while ensuring a line contact with the pin 10.

Figs. 10 to 14 are schematic views showing the structure of a wiper according to a second specific embodiment of the present invention. The common aspects in structure between the wiper 200 according to the second specific embodiment shown in Figs. 10 to 14 and the wiper 100 according to the first specific embodiment shown in Figs. 5 to 9 will not be described repeatedly. Only the special aspects of the connecting hook 5 according to the second specific embodiment of the present invention in the wiper 200 of the second specific embodiment will be highlighted herein.

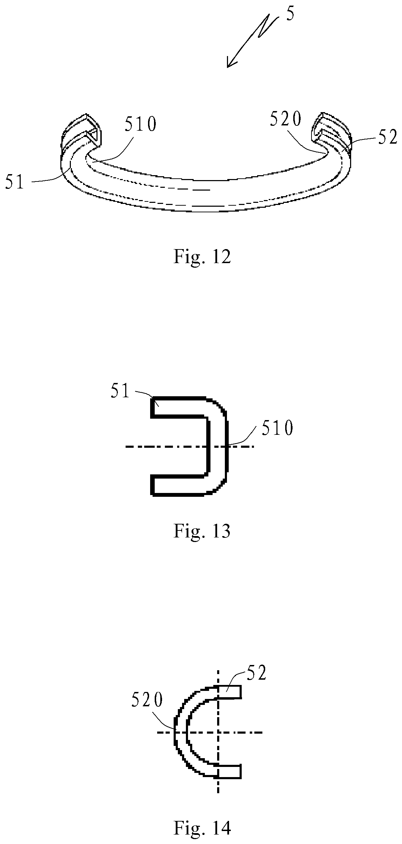

As shown in Figs. 12 to 14, in the wiper 200 according to the second specific embodiment, the connecting hook 5 according to the second specific embodiment is formed by punching a metal sheet. Two sides of the metal sheet at the second contacting surface 520 bends towards a back surface direction of the second contacting surface 520 so that the connecting hook 5 has a U-shaped cross section approximate to an arc bottom at the second hooking portion 52 (as shown in Fig. 14). Two sides of the metal sheet at the first contacting surface 510 bends towards a back surface direction of the first contacting surface 510 so that the connecting hook 5 has a U-shaped cross section approximate to a flat bottom at the first hooking portion 51 (as shown in Fig. 13). Similarly, the connecting hook 5 of the present invention is simple in structure and easy to achieve, and has a higher structural strength while ensuring a line contact with the pin 10.

As shown in Fig. 11, in the wiper 200 according to the second specific embodiment, the first hooking portion 51 of the connecting hook 5 also has a first contacting surface 510 which is in line contact with the pin 10. As compared with a point contact in the wiper of the prior art, the connecting hook 5 has a well-defined surface contact with the pin 10, thus reducing a contact stress between the connecting hook 5 and the pin 10, and thereby greatly decreasing wear of the connecting hook 5 and the pin 10, and lengthening life span of the wiper 200.

Although the wiper 100 according to the first specific embodiment of the present invention has been described with reference to Figs. 5 to 9, and the wiper 200 according to the second specific embodiment of the present invention has been described with reference to Figs. 10 to 14, the structure of the connecting hook of the present invention is not merely limited to the two specific embodiments as described herein. For example, those of ordinary skills in the art will understand that in case that the structure length at the first hooking portion 51 of the connecting hook 5 according to the second specific embodiment of the present invention is ensured, it is also possible that the metal sheet at two sides of the first contacting surface 510 does not bend towards a back surface direction of the first contacting surface 510, namely, the metal sheet of the connecting hook 5 at the first hooking portion 51 is of a planar shape rather than being bent. Therefore, any structure that can achieve a line contact between the connecting hook and the pin 10 does not depart from the essence of the present invention and falls within the scope of protection of the present invention.

Through an effective and reasonable improvement on the connecting hook in the wiper of the prior art, the wipers 100, 200 of the present invention change an original point contact between the connecting hook and the pin into a line contact so that there is a well-defined surface contact between the connecting hook and the pin, and contact stress between components is reduced, thus greatly reducing wear of components inside the wipers 100, 200 and improving life span of the wipers 100, 200. In various specific embodiments, the modifications to existing wipers are minor, the structures of the connecting hook are simple, and technical solutions can be very easily achieved.

The above described specific embodiments are merely for the purpose of illustrating the present invention, rather than limiting the present invention in any way.

## Claims

1. A connecting hook (3, 5) for a wiper which is **characterized in that**,
a) it has a first hooking portion (31, 51) and a second hooking portion (32, 52) which are formed integrally,
b) the first hooking portion (31, 51) has a first contacting surface (310, 510), the second hooking portion (32, 52) has a second contacting surface (320, 520),
c) the first contacting surface (310, 510) is in a straight line in a cross section of the connecting hook (3, 5);
d) wherein the second contacting surface (320, 520) is in a circular arc in a cross section of the connecting hook (3, 5); and
e) wherein the connecting hook (3, 5) transitions to the second contacting surface (320, 520) smoothly from the first contacting surface (310, 510).

2. The connecting hook (5) according to claim 1, wherein the connecting hook (5) is punched from a metal sheet, and two sides of the metal sheet at the second contacting surface (520) bend towards a back surface direction of the second contacting surface (320, 520).

3. The connecting hook (5) according to claim 2, wherein the metal sheet at two sides of the first contacting surface (310, 510) bends towards a back surface direction of the first contacting surface (510).

4. The connecting hook (3) according to claim 1, wherein the connecting hook (3) has a circular cross section at the second hook portion (32), and the cross section of the first hooking portion (31) of the connecting hook (3) has a pair of straight lines that are parallel with each other.

5. The connecting hook (3, 5) according to claim 1, wherein the connecting hook (3, 5) is of a C-shaped, and the first hooking portion (31, 51) and the second hooking portion (32, 52) are located at two ends of the C-shaped connecting hook (3, 5) respectively.

6. A wiper (100, 200), comprising:
i) an arm head (1) mounted with a column pin (10);
ii) a retaining arm (2) connected to the arm head (1) while being rotatable relative to the arm head (1); and
iii) the connecting hook (3, 5) according to any one of claims 1 to 5;
iv) wherein the first hooking portion (31, 51) is mounted to the pin (10), the second hooking portion (32, 52) is mounted to a resilient element (20) which is pre-loaded, there is line contact between the first contacting surface (310, 510) and the pin (10), and the second contacting surface (320, 520) contacts the resilient element (20).

7. The wiper (100, 200) according to claim 6, wherein the retaining arm (2) is connected to the arm head (1) via a pivot shaft (4), the retaining arm (2) is rotatable relative to the arm head (1) between a first position and a second position, and when the retaining arm (2) rotates, the connecting hook (3, 5) rotates about the pin (10) and creates a sliding movement between the first contacting surface (310, 510) and the pin (10); when the retaining arm (2) is in the first position, an elastic force of the resilient element (20) which is pre-loaded forms a forward direction torque to the retaining arm (2) relative to the pivot shaft (4), and when the retaining arm (2) is in the second position, an elastic force of the resilient element (20) which is pre-loaded forms a reverse direction torque to the retaining arm (2) relative to the pivot shaft (4).

8. The wiper (100, 200) according to claim 6, wherein the pin (10) is of a column shape, the resilient element (20) has an arc-shaped curved hook (22) which hooks the second contacting surface (320, 520), and the resilient element (20), after being pre-loaded, has an elastic pulling force imposed on the second contacting surface (320, 520) of the connecting hook (3, 5).

## Patentansprüche

1. Verbindungshaken (3, 5) für einen Wischer, der **dadurch gekennzeichnet ist, dass**
a) er einen ersten Hakenabschnitt (31, 51) und einen zweiten Hakenabschnitt (32, 52) aufweist, die integral ausgebildet sind,
b) der erste Hakenabschnitt (31, 51) eine erste Kontaktfläche (310, 510) aufweist, der zweite Hakenabschnitt (32, 52) eine zweite Kontaktfläche (320, 520) aufweist,
c) die erste Kontaktfläche (310, 510) eine Gerade in einem Querschnitt des Verbindungshakens (3, 5) ist;
d) wobei die zweite Kontaktfläche (320, 520) in einem Kreisbogen in einem Querschnitt des Verbindungshakens (3, 5) liegt; und
e) wobei der Verbindungshaken (3, 5) von der ersten Kontaktfläche (310, 510) fließend in die zweite Kontaktfläche (320, 520) übergeht.

2. Verbindungshaken (5) nach Anspruch 1, wobei der Verbindungshaken (3, 5) aus einem Blech ausgestanzt ist und sich zwei Seiten des Blechs an der zweiten Kontaktfläche (520) zu einer Rückseitenrichtung der zweiten Kontaktfläche (320, 520) krümmen.

3. Verbindungshaken (5) nach Anspruch 2, wobei sich das Blech an zwei Seiten der ersten Kontaktfläche (310, 510) zu einer Rückseitenrichtung der ersten Kontaktfläche (510) krümmt.

4. Verbindungshaken (3) nach Anspruch 1, wobei der Verbindungshaken (3) einen kreisförmigen Querschnitt an dem zweiten Hakenabschnitt (32) aufweist, und der Querschnitt des ersten Hakenabschnitts (31) des Verbindungshakens (3) ein Paar Geraden aufweist, die parallel zueinander sind.

5. Verbindungshaken (3, 5) nach Anspruch 1, wobei der Verbindungshaken (3, 5) eine C-Form aufweist und sich der erste Hakenabschnitt (31, 51) und der zweite Hakenabschnitt (32, 52) an zwei Enden des C-förmigen Verbindungshakens (3 bzw. 5) befinden.

6. Wischer (100, 200), umfassend:
i) einen Armkopf (1), der mit einem Säulenstift (10) angebracht ist;
ii) einen Haltearm (2), der mit dem Armkopf (1) verbunden ist, während er bezüglich des Armkopfs (1) drehbar ist; und
iii) den Verbindungshaken (3, 5) nach einem der Ansprüche 1 bis 5;
iv) wobei der erste Hakenabschnitt (31, 51) an dem Stift (10) angebracht ist, der zweite Hakenabschnitt (32, 52) an einem vorbelasteten federnden Element (20) angebracht ist, zwischen der ersten Kontaktfläche (310, 510) und dem Stift (10) ein Linienkontakt besteht und die zweite Kontaktfläche (320, 520) das federnde Element (20) berührt.

7. Wischer (100, 200) nach Anspruch 6, wobei der Haltearm (2) über einen Gelenkbolzen (4) mit dem Armkopf (1) verbunden ist, wobei der Haltearm (2) bezüglich des Armkopfs (1) zwischen einer ersten Position und einer zweiten Position drehbar ist, und wenn sich der Haltearm (2) dreht, sich der Verbindungshaken (3, 5) um den Stift (10) dreht und eine Gleitbewegung zwischen der ersten Kontaktfläche (310, 510) und dem Stift (10) erzeugt; wenn sich der Haltearm (2) in der ersten Position befindet, eine elastische Kraft des vorbelasteten federnden Elements (20) ein Vorwärtsrichtungsmoment an dem Haltearm (2) bezüglich des Gelenkbolzens (4) bildet, und wenn sich der Haltearm (2) in der zweiten Position befindet, eine elastische Kraft des vorbelasteten federnden Elements (20) ein Rückwärtsrichtungsmoment an dem Haltearm (2) bezüglich des Gelenkbolzens (4) bildet.

8. Wischer (100, 200) nach Anspruch 6, wobei der Stift (10) eine Säulenform aufweist, das federnde Element (20) einen bogenförmigen gekrümmten Haken (22) aufweist, der die zweite Kontaktfläche (320, 520) festhakt, und das federnde Element (20) nach dem Vorbelasten eine elastische Zugkraft aufweist, die an die zweite Kontaktfläche (320, 520) des Verbindungshakens (3, 5) angelegt ist.

## Revendications

1. Crochet de liaison (3, 5) pour un essuie-glace, **caractérisé en ce que**
a) il présente une première portion d'accrochage (31, 51) et une deuxième portion d'accrochage (32, 52) qui sont formées intégralement,
b) la première portion d'accrochage (31, 51) présente une première surface de contact (310, 510), la deuxième portion d'accrochage (32, 52) présente une deuxième surface de contact (320, 520),
c) la première surface de contact (310, 510) est rectiligne en coupe transversale à travers le crochet de liaison (3, 5) ;
dans lequel
d) la deuxième surface de contact (320, 520) est en forme d'arc circulaire en coupe transversale à travers le crochet de liaison (3, 5) ; et
e) le crochet de liaison (3, 5) présente une transition douce de la première surface de contact (310, 510) à la deuxième surface de contact (320, 520) .

2. Crochet de liaison (5) selon la revendication 1, le crochet de liaison (5) étant découpé à partir d'une tôle métallique, et deux côtés de la tôle métallique au niveau de la deuxième surface de contact (520) étant recourbés dans la direction d'une surface arrière de la deuxième surface de contact (320, 520).

3. Crochet de liaison (5) selon la revendication 2, dans lequel la tôle métallique, au niveau de deux côtés de la première surface de contact (310, 510), est recourbée dans la direction d'une surface arrière de la première surface de contact (510) .

4. Crochet de liaison (3) selon la revendication 1, le crochet de liaison (3) présentant une section transversale circulaire au niveau de la deuxième portion de crochet (32), et la section transversale de la première portion de crochet (31) du crochet de liaison (3) présentant une paire de lignes droites qui sont parallèles l'une à l'autre.

5. Crochet de liaison (3, 5) selon la revendication 1, le crochet de liaison (3, 5) présentant une forme en C, et la première portion d'accrochage (31, 51) et la deuxième portion d'accrochage (32, 52) étant situées respectivement aux deux extrémités du crochet de liaison (3, 5) en forme de C.

6. Essuie-glace (100, 200), comprenant :
i) une tête de bras (1) montée avec une broche de colonne (10) ;
ii) un bras de retenue (2) connecté à la tête de bras (1) tout en pouvant tourner par rapport à la tête de bras (1) ; et
iii) le crochet de liaison (3, 5) selon l'une quelconque des revendications 1 à 5 ;
dans lequel
iv) la première portion d'accrochage (31, 51) est montée sur la broche (10), la deuxième portion d'accrochage (32, 52) est montée sur un élément élastique (20) qui est précontraint, il existe un contact linéaire entre la première surface de contact (310, 510) et la broche (10), et la deuxième surface de contact (320, 520) vient en contact avec l'élément élastique (20).

7. Essuie-glace (100, 200) selon la revendication 6, dans lequel le bras de retenue (2) est connecté à la tête de bras (1) par le biais d'un axe de pivotement (4), le bras de retenue (2) peut tourner par rapport à la tête de bras (1) entre une première position et une deuxième position, et lorsque le bras de retenue (2) tourne, le crochet de liaison (3, 5) tourne autour de la broche (10) et crée un mouvement de coulissement entre la première surface de contact (310, 510) et la broche (10) ; lorsque le bras de retenue (2) est dans la première position, une force élastique de l'élément élastique (20) qui est précontraint forme un couple orienté dans la direction vers l'avant sur le bras de retenue (2) par rapport à l'axe de pivotement (4), et lorsque le bras de retenue (2) est dans la deuxième position, une force élastique de l'élément élastique (20) qui est précontraint forme un couple orienté dans la direction inverse sur le bras de retenue (2) par rapport à l'axe de pivotement (4).

8. Essuie-glace (100, 200) selon la revendication 6, dans lequel la broche (10) présente une forme de colonne, l'élément élastique (20) présente un crochet (22) courbé en forme d'arc qui accroche la deuxième surface de contact (320, 520), et l'élément élastique (20), après avoir été précontraint, produit une force de traction élastique appliquée à la deuxième surface de contact (320, 520) du crochet de liaison (3, 5).
